# EUROPEAN PATENT APPLICATION

(11) **EP 4 378 969 A1**
(43) Date of publication of application: **05.06.2024**
(21) Application number: 22869915.3
(22) Date of filing: 09.09.2022
(51) Int. Cl.: C08F 236/18, C08L 13/02, C08K 3/06, C08K 3/22

(54) **POLYMER LATEX COMPOSITION, IMMERSION MOLDED BODY, AND METHOD FOR PRODUCING POLYMER LATEX COMPOSITION**

(30) Priority: 17.09.2021 JP 2021152300
(71) Applicant: Denka Company Limited, Tokyo 103-8338 (JP)
(72) Inventor: KATO, Masahiro, Tokyo 103-8338 (JP); KUMAGAI, Yushi, Tokyo 103-8338 (JP); ITO, Misaki, Tokyo 103-8338 (JP)
(74) Representative: Gulde & Partner
(86) International application number: PCT/JP2022/033948
(87) International publication number: WO 2023/042768

(57) **Abstract**

Provided is a polymer latex composition capable of obtaining a dip-molded body having excellent flexibility, breaking elongation, and breaking strength.

A polymer latex composition including a carboxy-modified acrylonitrile-butadiene copolymer (A), a carboxy-modified chloroprene copolymer (B), and a metal oxide (C), wherein a component ratio (A)/(B) of the carboxy-modified acrylonitrile-butadiene copolymer (A) and the carboxy-modified chloroprene copolymer (B) in the polymer latex composition is 90/10 to 50/50.

## Description

### Technical Field

The present invention relates to a polymer latex composition containing an acrylonitrile-butadiene copolymer and a chloroprene copolymer, a dip-molded body, and a method for producing the polymer latex composition.

### Background Art

Chloroprene latex compositions containing chloroprene polymers are used in various fields such as dip-molded bodies (dipped products), fiber treatment agents, paper processing agents, adhesives, elastic asphalt (modified asphalt), and elastic cement or the like. In particular, the chloroprene latex composition is used as a main raw material for various kinds of gloves for industrial use, inspection use, surgical use, etc. in the case of dip-molded bodies. Conventionally, natural rubbers have been mainly used for glove applications, but as allergies due to proteins or the like contained in natural rubbers have become a problem, demand for synthetic rubber gloves is increasing.

Acrylonitrile-butadiene latex compositions containing acrylonitrile-butadiene copolymers are most commonly used in the gloves for inspection, and the acrylonitrile-butadiene latex compositions are usually carboxy-modified acrylonitrile butadiene copolymer latex compositions in which the polymer is copolymerized with methacrylic acid. The dip-molded body obtained from this copolymer latex composition has excellent breaking strength, and is hard to tear even with thin gloves, while being inferior to flexibility and breaking elongation and having problems in wearing feeling and workability.

Accordingly, the addition of a plasticizer is adopted to give flexibility to gloves, but in order to achieve excellent flexibility, it is necessary to add a large amount of plasticizer, and there are concerns from the viewpoint of hygiene such as bleed-out. Therefore, a method of blending a polymer having excellent flexibility (for example, natural rubber, isoprene rubber, chloroprene rubber) with a carboxy-modified acrylonitrile-butadiene copolymer is considered. However, when added in a small amount, excellent flexibility and improvement in breaking elongation cannot be obtained, and when added in a large amount, the breaking strength of the glove will be greatly reduced.

Blending of the acrylonitrile-butadiene copolymer and the chloroprene polymer has been studied (Patent Literatures 1 and 2 below), and is also being studied for gloves (Patent Literatures 3 and 4 below), but they did not solve the problem of improving flexibility and breaking elongation.

### Citation List

### Patent Literature

Patent Literature 1: JP-B-Sho47-031412
Patent Literature 2: JP-A-Sho52-060839
Patent Literature 3: WO2015/074092
Patent Literature 4: JP-A-2020-189963

### Summary of Invention

### Technical Problem

It is required to improve the flexibility and breaking elongation without significantly reducing the breaking strength of the dip-molded body (glove, etc.) obtained by using the carboxy-modified acrylonitrile-butadiene copolymer.

One aspect of the present invention is to provide a polymer latex composition capable of obtaining a dip-molded body having excellent flexibility, breaking elongation, and breaking strength. Another aspect of the present invention is to provide a dip-molded body of the aforementioned polymer latex composition. In addition, one aspect of the present invention is to provide a method for producing the above polymer latex composition.

### Solution to Problem

In order to solve the above-mentioned problems, the present inventors have made intensive studies and found that by making a polymer latex composition contain a carboxy-modified acrylonitrile-butadiene copolymer, a carboxy-modified chloroprene copolymer, and a metal oxide, and specifying the mixing ratio of the carboxy-modified acrylonitrile-butadiene copolymer and the carboxy-modified chloroprene copolymer, the above problems can be achieved. That is, the present invention relates to a polymer latex composition comprising a carboxy-modified acrylonitrile-butadiene copolymer (A), a carboxy-modified chloroprene copolymer (B), and a metal oxide (C), wherein a component ratio (A)/(B) of the carboxy-modified acrylonitrile-butadiene copolymer (A) and the carboxy-modified chloroprene copolymer (B) in the polymer latex composition is 90/10 to 50/50.

According to another aspect of the present invention, there is provided a dip-molded body obtained from the polymer latex composition described above.

According to another aspect of the present invention, there is provided a method for producing the polymer latex composition described above, comprising a carboxy-modified chloroprene copolymer (B) polymerization step and a mixing step, wherein in the carboxy-modified chloroprene copolymer (B) polymerization step, a raw material comprising a 2-chloro-1,3-butadiene monomer (B-1) and a carboxy group-containing vinyl monomer (B-2), or a raw material comprising a 2-chloro-1,3-butadiene monomer (B-1), a carboxy group-containing vinyl monomer (B-2), and a 2,3-dichloro-1,3-butadiene monomer is polymerized in the presence of at least pure water, a chain transfer agent, an emulsifier, a pH adjuster, and an initiator at a polymerization temperature of 5 to 55°C and a polymerization conversion rate of 60% to 99% to obtain a carboxy-modified chloroprene copolymer (B) latex comprising the carboxy-modified chloroprene copolymer (B), and in the mixing step, a carboxy-modified acrylonitrile-butadiene copolymer (A) latex comprising the carboxy-modified acrylonitrile-butadiene copolymer (A) and the carboxy-modified chloroprene copolymer (B) latex comprising the carboxy-modified chloroprene copolymer (B) are mixed.

Various embodiments of the present invention are illustrated below. The embodiments shown below can be combined with each other.
[1] A polymer latex composition, comprising a carboxy-modified acrylonitrile-butadiene copolymer (A), a carboxy-modified chloroprene copolymer (B), and a metal oxide (C), wherein:
   a component ratio (A)/(B) of the carboxy-modified acrylonitrile-butadiene copolymer (A) and the carboxy-modified chloroprene copolymer (B) in the polymer latex composition is 90/10 to 50/50.
[2] The polymer latex composition of [1], wherein:
   the carboxy-modified chloroprene copolymer (B) comprises a monomer unit derived from a 2-chloro-1,3-butadiene monomer (B-1) and a monomer unit derived from a carboxy group-containing vinyl monomer (B-2), and
   when the carboxy-modified chloroprene copolymer (B) is 100 parts by mass, the carboxy-modified chloroprene copolymer (B) comprises 0.5 to 5.0 parts by mass of the monomer unit derived from the carboxy group-containing vinyl monomer (B-2).
[3] The polymer latex composition of [2], wherein:
   the carboxy group-containing vinyl monomer (B-2) is at least one selected from the group consisting of an acrylic acid, a methacrylic acid, a crotonic acid, an itaconic acid, a maleic acid, and a fumaric acid.
[4] The polymer latex composition of any one of [1] to [3], wherein:
   the polymer latex composition comprises a sulfur, a vulcanization accelerator, and an anti-aging agent.
[5] The polymer latex composition of any one of [1]to [4], wherein:
   a vulcanized dip-molded body, obtained by vulcanizing a dip-molded body comprising the polymer latex composition at 120°C for 20 minutes, has a breaking strength of 17 MPa or more and a breaking elongation of 550% or more as measured in accordance with JIS K6251.
[6] A dip-molded body obtained from the polymer latex composition of any one of [1]to [5].
[7] The dip-molded body of [6], wherein:
   the dip-molded body is a glove, a balloon, a catheter, or a boot.
[8] A method for producing the polymer latex composition of any one of [1]to [5], comprising a carboxy-modified chloroprene copolymer (B) polymerization step and a mixing step, wherein:
   in the carboxy-modified chloroprene copolymer (B) polymerization step, a raw material comprising a 2-chloro-1,3-butadiene monomer (B-1) and a carboxy group-containing vinyl monomer (B-2), or a raw material comprising a 2-chloro-1,3-butadiene monomer (B-1), a carboxy group-containing vinyl monomer (B-2), and a 2,3-dichloro-1,3-butadiene monomer is polymerized in the presence of at least pure water, a chain transfer agent, an emulsifier, a pH adjuster, and an initiator at a polymerization temperature of 5 to 55°C and a polymerization conversion rate of 60% to 99% to obtain a carboxy-modified chloroprene copolymer (B) latex comprising the carboxy-modified chloroprene copolymer (B), and
   in the mixing step, a carboxy-modified acrylonitrile-butadiene copolymer (A) latex comprising the carboxy-modified acrylonitrile-butadiene copolymer (A) and the carboxy-modified chloroprene copolymer (B) latex comprising the carboxy-modified chloroprene copolymer (B) are mixed.

### EFFECTS OF THE INVENTION

According to the polymer latex composition of the present invention, it is possible to provide a dip-molded body and a dipped product thereof that excellent in flexibility and breaking elongation and exhibiting mechanical strength such as high breaking strength.

### Description of Embodiments

Hereinafter, embodiments for carrying out the present invention will be described in detail. Note that the present invention is not limited to the embodiments described below.

### 1. Polymer Latex Composition

The polymer latex composition according to the present invention comprises a carboxy-modified acrylonitrile-butadiene copolymer (A), a carboxy-modified chloroprene copolymer (B), and a metal oxide (C). Hereinafter, components that may be included in the polymer latex composition according to the present invention will be described.

### <Carboxy-Modified Acrylonitrile-Butadiene Copolymer (A)>

First, the carboxy-modified acrylonitrile-butadiene copolymer according to this embodiment will be described. The carboxy-modified acrylonitrile-butadiene copolymer according to the present invention contains a monomer unit derived from an acrylonitrile monomer, a monomer unit derived from a butadiene monomer, and a monomer unit derived from a carboxy group-containing vinyl monomer. The carboxy-modified acrylonitrile-butadiene copolymer according to one embodiment of the present invention may contain monomer units derived from monomers other than acrylonitrile monomer, butadiene monomer and carboxy group-containing vinyl monomer. In addition, the carboxy-modified acrylonitrile-butadiene copolymer according to one embodiment of the present invention may be composed of a terpolymer of a monomer unit derived from an acrylonitrile monomer, a monomer unit derived from a butadiene monomer, a monomer unit derived from a carboxy group-containing vinyl monomer.

The carboxy-modified acrylonitrile-butadiene copolymer according to one embodiment of the present invention can contain 25 to 40% by mass of the monomer unit derived from the acrylonitrile monomer, when the carboxy-modified acrylonitrile-butadiene copolymer is 100% by mass. The content of the monomer unit derived from the acrylonitrile monomer in the carboxy-modified acrylonitrile-butadiene copolymer is, for example, 25, 26, 27, 28, 29, 30, 31, 32, 33, 34, 35, 36, 37, 38, 39, 40% by mass, and may be within the range between any two of the numerical values exemplified here.

The carboxy-modified acrylonitrile-butadiene copolymer according to one embodiment of the present invention can contain 52 to 75% by mass of the monomer unit derived from the butadiene monomer, when the carboxy-modified acrylonitrile-butadiene copolymer is 100% by mass. The content of the monomer unit derived from the butadiene monomer in the carboxy-modified acrylonitrile-butadiene copolymer is, for example, 52, 53, 54, 55, 56, 57, 58, 59, 60, 61, 62, 63, 64, 65, 66, 67, 68, 69, 70, 71, 72, 73, 74, 75% by mass, and may be within the range between any two of the numerical values exemplified here.

The carboxy-modified acrylonitrile-butadiene copolymer according to one embodiment of the present invention can contain 0.5 to 8% by mass of the monomer unit derived from the carboxy group-containing vinyl monomer, when the carboxy-modified acrylonitrile-butadiene copolymer is 100% by mass. The content of the monomer unit derived from the carboxy group-containing vinyl monomer in the carboxy-modified acrylonitrile-butadiene copolymer is, for example, 0.5, 0.6, 0.7, 0.8, 0.9, 1, 2, 3, 4, 5, 6, 7, 8% by mass, and may be within the range between any two of the numerical values exemplified here.

The copolymerization ratio of the carboxy-modified acrylonitrile-butadiene copolymer according to one embodiment of the present invention may be 25% to 40% by mass of acrylonitrile, 52% to 75% by mass of butadiene, and 0.5% to 8% by mass of carboxy group-containing vinyl monomer, preferably 31% to 36% by mass of acrylonitrile, 59% to 69% by mass of butadiene, and 0.8% to 7% by mass of carboxy group-containing vinyl monomer.

The carboxy-modified acrylonitrile-butadiene copolymer according to one embodiment of the present invention can contain a total of 90% by mass or more, preferably 95% by mass or more, and more preferably 98% by mass or more of the monomer unit derived from the acrylonitrile monomer, the monomer unit derived from the butadiene monomer, and the monomer unit derived from the carboxy group-containing vinyl monomer, when the carboxy-modified acrylonitrile-butadiene copolymer is 100% by mass.

The carboxy-modified acrylonitrile-butadiene copolymer according to one embodiment of the present invention can have a halogen content of less than 0.2% by mass, and preferably less than 0.1% by mass, when the carboxy-modified acrylonitrile-butadiene copolymer is 100% by mass. The carboxy-modified acrylonitrile-butadiene copolymer according to one embodiment of the present invention may also be halogen-free.

The carboxy-modified acrylonitrile-butadiene copolymer according to one embodiment of the present invention can also be composed of a monomer unit derived from an acrylonitrile monomer, a monomer unit derived from a butadiene monomer, and a monomer unit derived from a carboxy group-containing vinyl monomer.

The carboxy group-containing vinyl monomer can be at least one selected from the group consisting of an acrylic acid, a methacrylic acid, a crotonic acid, an itaconic acid, a maleic acid, and a fumaric acid, and preferably contains a methacrylic acid.

The carboxy-modified acrylonitrile-butadiene copolymer according to one embodiment of the present invention can be dispersed in water, and can be made into a latex obtained by emulsion polymerizing the monomers in the presence of one or more emulsifiers selected from rosin acids or alkali metal salts. The latex including the carboxy-modified acrylonitrile-butadiene copolymer contains the carboxy-modified acrylonitrile-butadiene copolymer as a main component, and can contain a solvent such as water, as well as other additives used during emulsion polymerization. In the carboxy-modified acrylonitrile-butadiene copolymer latex according to one embodiment of the present invention, a total solid content of one or more types of emulsifiers selected from rosin acids or alkali metal salts and the carboxy-modified acrylonitrile-butadiene copolymer is preferably 40 to 50% by mass, and more preferably 42 to 46% by mass, with respect to 100% by mass of the carboxy-modified acrylonitrile-butadiene copolymer latex.

### <Carboxy-Modified Chloroprene Copolymer (B)>

The carboxy-modified chloroprene copolymer according to this embodiment is a copolymer containing a monomer unit derived from a chloroprene monomer and a monomer unit derived from a carboxy group-containing vinyl monomer. In addition, the carboxy-modified chloroprene copolymer according to one embodiment of the present invention is a copolymer of a 2-chloro-1,3-butadiene (hereinafter also referred to as chloroprene monomer) and a carboxy group-containing vinyl monomer, or a copolymer of a chloroprene monomer, a carboxy group-containing vinyl monomer, and other monomers that can be copolymerized with them. Examples of the other monomers include 1-chloro-1,3-butadiene, 2,3-dichloro-1,3-butadiene, butadiene, isoprene, styrene, acrylonitrile, sulfur, etc., and two or more types of these may be used in combination as other monomers.

When the carboxy-modified chloroprene copolymer contains monomer units derived from monomers other than chloroprene monomer and carboxy group-containing vinyl monomer, the carboxy-modified chloroprene copolymer preferably contains 50% by mass or more, more preferably 80% by mass or more, and even more preferable 90% by mass or more of the monomer unit derived from the chloroprene monomer, when the entire carboxy-modified chloroprene copolymer is 100% by mass.

The carboxy group-containing vinyl monomer can be at least one selected from the group consisting of an acrylic acid, a methacrylic acid, a crotonic acid, an itaconic acid, a maleic acid, and a fumaric acid, and preferably contains a methacrylic acid.

The copolymerization amount of the carboxy group-containing vinyl monomer in the carboxy-modified chloroprene copolymer can be 0.5 to 5.0% by mass, and preferably 1.0 to 4.0% by mass, with respect to 100% by mass of the carboxy-modified chloroprene copolymer. The content of the monomer unit derived from the carboxy group-containing vinyl monomer in the carboxy-modified chloroprene copolymer is, for example, 0.5, 1.0, 1.5, 2.0, 2.5, 3.0, 3.5, 4.0, 4.5, 5.0% by mass, when the carboxy-modified chloroprene copolymer is 100% by mass, and may be within the range between any two of the numerical values exemplified here.

The content of the monomer unit derived from the chloroprene monomer in the carboxy-modified chloroprene copolymer can be 50 to 99.5% by mass, and particularly preferably 95.0 to 99.5% by mass, when the carboxy-modified chloroprene copolymer is 100% by mass. The content of the monomer unit derived from the chloroprene monomer is, for example, 50, 55, 60, 65, 70, 75, 80, 85, 90, 95, 95.5, 96, 96.5, 97, 97.5, 98, 98.5, 99, 99.5% by mass, and may be within the range between any two of the numerical values exemplified here.

The carboxy-modified chloroprene copolymer (B) according to one embodiment of the present invention can contain 95.0 to 99.5% by mass of the monomer unit derived from the chloroprene monomer (B-1) and 0.5 to 5.0% by mass of the monomer unit derived from the carboxy group-containing vinyl monomer (B-2), when the carboxy-modified chloroprene copolymer (B) is 100% by mass.

The content of monomer units derived from monomers other than the chloroprene monomer and carboxy group-containing vinyl monomer in the carboxy-modified chloroprene copolymer is, for example, 0, 5, 10, 15, 20, 25, 30, 35, 40, 45, 50% by mass, when the carboxy-modified chloroprene copolymer is 100% by mass, and may be within the range between any two of the numerical values exemplified here.

The carboxy-modified chloroprene copolymer according to one embodiment of the present invention may not contain any monomer unit derived from monomers other than the chloroprene monomer and carboxy group-containing vinyl monomer.

As for the carboxy-modified chloroprene copolymer (B) according to one embodiment of the present invention, it is preferable that a vulcanized dip-molded body, obtained by vulcanizing a carboxy-modified chloroprene copolymer (B) latex composition containing said carboxy-modified chloroprene copolymer (B) at 130°C for 30 minutes, has a breaking strength of 8 MPa or more and a breaking elongation of 600% or more as measured in accordance with JIS K6251. The breaking strength is, for example, 8, 9, 10, 11, 12, 13, 14, 15, 16, 17, 18, 19, 20, 21, 22MPa, and may be within the range between any two of the numerical values exemplified here. The breaking elongation is, for example, 600, 650, 700, 750, 800, 850, 900, 950, 1000, 1050, 1100%, and may be within the range between any two of the numerical values exemplified here.

In addition, the dip-molded body made of the carboxy-modified chloroprene copolymer (B) latex composition containing the above-mentioned carboxy-modified chloroprene copolymer (B) contains at least carboxy-modified chloroprene copolymer (B) and metal oxide (C), and can further contain a vulcanizing agent. Moreover, the above-mentioned dip-molded body may also further contain a vulcanization accelerator. In addition, the above-mentioned dip-molded body may also further contain an anti-aging agent. The method for producing the above-mentioned dip-molded body and the vulcanized dip-molded body can be obtained according to the method of Examples. In addition, as an example, the thickness can be 0.10 to 0.30 mm.

The polymer latex composition according to one embodiment of the present invention may also include a chloroprene-based polymer that contains a monomer unit derived from a chloroprene monomer and does not contain a monomer unit derived from a carboxy group-containing vinyl monomer. As an example, the polymer latex composition according to one embodiment of the present invention may also include a chloroprene polymer composed of the chloroprene monomer unit.

The polymer latex composition according to one embodiment of the present invention preferably contains more carboxy-modified chloroprene copolymer (B) than the chloroprene-based polymer that does not contain a monomer unit derived from a carboxy group-containing vinyl monomer. It is preferably that the content of the chloroprene-based polymer that does not contain a monomer unit derived from a carboxy group-containing vinyl monomer, in the polymer latex composition, is less than 50% by mass, with respect to the total of 100% by mass of the carboxy-modified chloroprene copolymer (B) and the chloroprene-based polymer that does not contain a monomer unit derived from a carboxy group-containing vinyl monomer contained in the polymer latex composition, and is for example, 0, 5, 10, 15, 20, 25, 30, 35, 40, 45, 50% by mass, and may be within the range between any two of the numerical values exemplified here.

The method for producing carboxy-modified chloroprene copolymer (B) according to one embodiment of the present invention includes a carboxy-modified chloroprene copolymer (B) polymerization step. In the carboxy-modified chloroprene copolymer (B) polymerization step, a raw material containing a 2-chloro-1,3-butadiene monomer (B-1) and a carboxy group-containing vinyl monomer (B-2), or a raw material containing a 2-chloro-1,3-butadiene monomer (B-1), a carboxy group-containing vinyl monomer (B-2), and a 2,3-dichloro-1,3-butadiene monomer is polymerized in the presence of pure water, a chain transfer agent, an emulsifier, a pH adjuster, and an initiator at a polymerization temperature of 5 to 55°C and a polymerization conversion rate of 60% to 99% to obtain a carboxy-modified chloroprene copolymer (B) latex comprising the carboxy-modified chloroprene copolymer (B). In the polymerization step, a dispersant and/or a reducing agent may also be added.

When producing the carboxy-modified chloroprene copolymer according to the embodiment of the present invention, raw material monomers can be polymerized by a polymerization method such as emulsion polymerization, solution polymerization, suspension polymerization, or bulk polymerization. Among these polymerization methods, emulsion polymerization is preferred because it has various advantages such as easy control, easy extraction of the polymer from the polymerization-completed solution, and relatively fast polymerization rate.

Emulsion polymerization is a type of radical polymerization, in which raw material monomers are introduced into a reaction vessel together with a chain transfer agent, water, a pH adjuster such as alkali (e.g., metal hydroxide such as potassium hydroxide, sodium hydroxide), an emulsifier, a dispersant, a reducing agent (e.g., sodium bisulfite), a polymerization initiator, etc., and then polymerized.

As the chain transfer agent, those used in ordinary emulsion polymerization of chloroprene can be used. Specific examples of the chain transfer agent include long chain alkyl mercaptans such as n-dodecyl mercaptan and tert-dodecyl mercaptan, dialkyl xanthogen disulfides such as diisopropyl xanthogen disulfide and diethyl xanthogen disulfide. These chain transfer agents can be used alone or in combination of two or more. The amount of chain transfer agent used is preferably 0.01 to 1 part by mass with respect to 100 parts by mass of monomers.

Examples of the emulsifier include anionic emulsifiers, nonionic emulsifiers or the like. Examples of anionic emulsifiers include fatty acid salts such as beef tallow fatty acid potassium salt, partially hydrogenated beef tallow fatty acid potassium salt, potassium oleate, and sodium oleate; resin acid salts such as potassium rosinate, sodium rosinate, hydrogenated potassium rosinate, and hydrogenated sodium rosinate; and alkylbenzene sulfonates such as sodium dodecylbenzenesulfonate. Examples of nonionic emulsifiers include polyethylene glycol ester emulsifiers, polyvinyl alcohol or the like. Among these, anionic emulsifiers are preferred, and at least one selected from the group consisting of alkylbenzene sulfonates is more preferred. These emulsifiers can be used alone or in combination of two or more. The amount of emulsifier used is preferably 0.5 to 6.5 parts by mass with respect to 100 parts by mass of monomers.

Examples of the dispersant include sodium salt of β-naphthalenesulfonic acid formalin condensate or the like. Dispersants can be used alone or in combination of two or more. The amount of dispersant used is preferably 0.1 to 3.0 parts by mass with respect to 100 parts by mass of monomers.

In the polymerization step, it is more preferable to use an emulsifier and a dispersant.

Examples of the pH adjuster include potassium hydroxide, sodium hydroxide or the like. These pH adjusters may be used alone or in combination of two or more. Among the pH adjusters, it is preferable to use potassium hydroxide or sodium hydroxide because they are highly effective in increasing the pH value. The amount of pH adjuster added can be 0.01 to 2.0 parts by mass with respect to 100 parts by mass of monomers.

Examples of the reducing agent include potassium pyrosulfite, potassium sulfite, potassium hydrogen sulfite, potassium phosphate, potassium hydrogen phosphate, sodium bisulfite or the like. The amount of reducing agent added can be 0.1 to 4.0 parts by mass with respect to 100 parts by mass of monomers.

As the polymerization initiator, inorganic peroxides such as potassium persulfate, ammonium persulfate, sodium persulfate, and hydrogen peroxide; and organic peroxides such as benzoyl peroxide, etc. can be used. These polymerization initiators can be used alone or in combination of two or more. The amount of polymerization initiator used is preferably 0.01 to 10 parts by mass with respect to 100 parts by mass of monomers.

The amount of water used during emulsion polymerization is preferably 50 to 300 parts by mass, more preferably 80 to 150 parts by mass, with respect to 100 parts by mass of monomers.

The polymerization temperature is not particularly limited, but from the viewpoint of easily maintaining the flexibility stability of the carboxy-modified chloroprene copolymer over time, it is preferably in the temperature range of 5 to 55°C, more preferably in the temperature range of 10 to 50°C. The polymerization temperature is, for example, 5, 10, 15, 20, 25, 30, 35, 40, 45, 50, 55°C, and may be within the range between any two of the numerical values exemplified here.

The polymerization rate (polymerization conversion rate) of the raw material monomer is preferably 60% or more, more preferably 70% or more, and even more preferably 80% or more. The upper limit can be, for example, 99% or less. The polymerization conversion rate is, for example, 60, 65, 70, 75, 80, 85, 90, 95, 99%, and may be within the range between any two of the numerical values exemplified here. By setting the polymerization conversion rate within this range, the solid content of the carboxy-modified chloroprene copolymer and the polymerization time during production are appropriate, resulting in excellent productivity.

As examples of the polymerization terminator added to stop the polymerization when the polymerization rate of the raw material monomer reaches a target polymerization rate include thiodiphenylamine, 4-tert-butylcatechol, 2,2'-methylenebis(4-methyl-6-tert-butylphenol), diethylhydroxylamine, etc. can be used.

After removing unreacted monomers after polymerization, a concentration operation is performed to adjust the solid content concentration to an optimal range. The solid content concentration is preferably in the range of 40 to 50% by mass.

By the above production method, a latex containing the carboxy-modified chloroprene copolymer (B) can be obtained. Note that the latex containing the carboxy-modified chloroprene copolymer (B) according to one embodiment of the present invention may contain free carboxyl group-containing vinyl monomers that are not bonded to the carboxy-modified chloroprene copolymer (B). The content of the free carboxyl group-containing vinyl monomer can be 0.1 to 2.0% by mass, with respect to 100% by mass of the carboxy-modified chloroprene copolymer (B). Note that the content of the free carboxyl group-containing vinyl monomer can be evaluated by liquid chromatography.

In the polymer latex composition according to this embodiment, the component ratio (A)/(B) of the carboxy-modified acrylonitrile-butadiene copolymer (A) and the carboxy-modified chloroprene copolymer (B) in the polymer latex composition is 90/10 to 50/50. When the total of the carboxy-modified acrylonitrile-butadiene copolymer (A) and the carboxy-modified chloroprene copolymer (B) in the polymer latex composition is 100% by mass, the content of the carboxy-modified chloroprene copolymer (B) in the polymer latex composition is 10 to 50% by mass, for example, 10, 15, 20, 25, 30, 35, 40, 45, 50% by mass, and may be within the range between any two of the numerical values exemplified here.

The polymer latex composition according to the present invention contains a carboxy-modified acrylonitrile-butadiene copolymer (A), a carboxy-modified chloroprene copolymer (B), and a metal oxide (C), by setting the component ratio (A)/(B) of the carboxy-modified acrylonitrile-butadiene copolymer (A) and the carboxy-modified chloroprene copolymer (B) in the polymer latex composition to a specific range, it is possible to exhibit flexibility and breaking elongation while having excellent breaking strength.

### <Metal Oxide (C)>

The polymer latex composition according to the present invention contains a metal oxide (C).

As described above, both the acrylonitrile-butadiene copolymer and the chloroprene copolymer contained in the polymer latex composition according to the present invention have a monomer unit derived from a carboxy group-containing vinyl monomer. It is believed that a dip-molded body having excellent breaking strength, flexibility, and breaking elongation can be obtained by ionically crosslinking the carboxyl group contained in each of these copolymers with metal ions derived from the metal oxide.

Examples of the metal oxide include zinc oxide, lead oxide, trilead tetraoxide, magnesium oxide, titanium oxide, calcium oxide or the like. The content of the metal oxide may be 0.5 to 10 parts by mass with respect to 100 parts by mass of the solid content of the polymer latex composition, from the viewpoint that crosslinking between the carboxy-modified acrylonitrile-butadiene copolymer (A) and the carboxy-modified chloroprene copolymer (B) is easy to progress sufficiently, and it is easy to obtain a dip-molded body with excellent flexibility, breaking elongation, breaking strength, modulus, etc. Note that the solid content of the polymer latex composition refers to all components obtained by removing volatile components such as water from the polymer latex composition, and includes carboxy-modified acrylonitrile-butadiene copolymer (A), carboxy-modified chloroprene copolymer (B), and nonvolatile components of various additives added during emulsification polymerization.

The content of the metal oxide is, for example, 0.5, 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10 parts by mass, and may be within the range between any two of the numerical values exemplified here. The metal oxide can be used alone or in combination of two or more.

The polymer latex composition according to one embodiment of the present invention may contain a pH adjuster, a freeze stabilizer, an emulsifier, a viscosity modifier, an antioxidant, a preservative or the like.

As the pH adjuster, emulsifier, etc., the pH adjuster and emulsifier or the like used in the production of latex containing carboxy-modified chloroprene copolymer (B) can be used.

The polymer latex composition according to one embodiment of the present invention may contain additives such as a vulcanizing agent, a vulcanization accelerator, an anti-aging agent (antioxidant, e.g. an anti-ozone aging agent), a filler, a plasticizer, a pigment, a coloring agent, a wetting agent, and an antifoaming agent. The polymer latex composition according to this embodiment can be a polymer latex composition containing a carboxy-modified acrylonitrile-butadiene copolymer (A), a carboxy-modified chloroprene copolymer (B), a metal oxide (C), and these additives, and may be a polymer latex composition for dip molding. The polymer latex composition according to one embodiment of the present invention may not contain at least one additive selected from the group consisting of a vulcanizing agent, a vulcanization accelerator, an anti-aging agent, a filler, a plasticizer, a pigment, a coloring agent, a wetting agent, and an antifoaming agent as a form before mixing these additives.

Examples of the vulcanizing agent include sulfur (molecular sulfur, for example, cyclic sulfur such as S8) or the like. The content of the vulcanizing agent may be 0.5 to 10 parts by mass with respect to 100 parts by mass of the solid content of the polymer latex composition, from the viewpoint that crosslinking is easy to progress sufficiently, it is easy to obtain suitable breaking strength, modulus, etc. of the dip-molded body, and from the viewpoint that it is easy to obtain a suitable touch feeling of the dip-molded body. The vulcanizing agent can be used alone or in combination of two or more.

Examples of the vulcanization accelerator include thiuram-based, dithiocarbamate-based, thiourea-based, guanidine-based, xanthate-based, and thiazole-based vulcanization accelerators. As an example, a dithiocarbamate-based vulcanization accelerator can be used, and examples of the dithiocarbamate-based vulcanization accelerator include sodium dibutyldithiocarbamate, zinc dimethyldithiocarbamate, zinc dibutyldithiocarbamate, zinc diethyldithiocarbamate, zinc N-ethyl-N-phenyldithiocarbamate, zinc N-pentamethylenedithiocarbamate, copper dimethyldithiocarbamate, ferric dimethyldithiocarbamate, tellurium diethyldithiocarbamate or the like.

The vulcanization accelerator may be 0.5 to 5 parts by mass with respect to 100 parts by mass of the solid content of the polymer latex composition, from the viewpoint of obtaining proper strength. The vulcanization accelerator can be used alone or in combination of two or more.

Examples of the anti-aging agent include anti-ozone aging agents, phenol-based anti-aging agents, and amine-based anti-aging agents. Examples of amine-based anti-aging agents include diphenylamine-based compounds such as octylated diphenylamine, p-(p-toluene-sulfonylamide)diphenylamine, 4,4'-bis(α,α-dimethylbenzyl)diphenylamine, N,N'-diphenyl-p-phenylamine (DPPD), and N-isopropyl-N'-phenyl-p-phenylenediamine (IPPD). Examples of the anti-ozone aging agent include N,N'-diphenyl-p-phenylenediamine (DPPD), N-isopropyl-N'-phenyl-p-phenylenediamine (IPPD) or the like. As the anti-aging agent, when appearance (particularly color tone) or hygiene is regarded as important, such as in medical gloves, a hindered phenol-based antioxidant can be used. An example is a butylated reaction product of DCPD and p-cresol. The content of the anti-aging agent may be 0.1 to 5 parts by mass with respect to 100 parts by mass of the solid content of the polymer latex composition, from the viewpoint of easily obtaining a sufficient anti-aging effect.

As for the polymer latex composition according to one embodiment of the present invention, it is preferable that a vulcanized dip-molded body, obtained by vulcanizing a dip-molded body containing the polymer latex composition at 120°C for 20 minutes, has a breaking strength of 17 MPa or more as measured in accordance with JIS K6251. The breaking strength is, for example, 17, 18, 20, 22, 24, 26, 28, 30, 32, 34, 36, 38, 40 MPa, and may be within the range between any two of the numerical values exemplified here.

As for the polymer latex composition according to one embodiment of the present invention, it is preferable that a vulcanized dip-molded body, obtained by vulcanizing a dip-molded body containing the polymer latex composition at 120°C for 20 minutes, has a breaking elongation of 550% or more as measured in accordance with JIS K6251. The breaking elongation is, for example, 550, 600, 650, 700, 750, 800, 850, 900, 950, 1000%, and may be within the range between any two of the numerical values exemplified here.

As for the polymer latex composition according to one embodiment of the present invention, it is preferable that a vulcanized dip-molded body, obtained by vulcanizing a dip-molded body containing the polymer latex composition at 120°C for 20 minutes, has a modulus at 100% elongation of 2.5 MPa or less as measured in accordance with JIS K6251. The modulus at 100% elongation is, for example, 1.0, 1.1, 1.2, 1.3, 1.4, 1.5, 1.6, 1.7, 1.8, 1.9, 2.0, 2.1, 22, 2.3, 2.4, 2.5 MPa, and may be within the range between any two of the numerical values exemplified here.

As for the polymer latex composition according to one embodiment of the present invention, it is preferable that a vulcanized dip-molded body, obtained by vulcanizing a dip-molded body containing the polymer latex composition at 120°C for 20 minutes, has a modulus at 300% elongation of 5.0 MPa or less as measured in accordance with JIS K6251. The modulus at 300% elongation is, for example, 1.0, 1.5, 2.0, 2.5, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0 MPa, and may be within the range between any two of the numerical values exemplified here.

As for the polymer latex composition according to one embodiment of the present invention, it is preferable that a vulcanized dip-molded body, obtained by vulcanizing a dip-molded body containing the polymer latex composition at 120°C for 20 minutes, has a modulus at 500% elongation of 15.0 MPa or less as measured in accordance with JIS K6251. The modulus at 500% elongation is, for example, 5, 6, 7, 8, 9, 10, 11, 12, 13, 14, 15 MPa, and may be within the range between any two of the numerical values exemplified here.

The above-mentioned dip-molded body contains at least a carboxy-modified acrylonitrile-butadiene copolymer (A), a carboxy-modified chloroprene copolymer (B), and a metal oxide (C), and can further contain a vulcanizing agent. In addition, the above-mentioned dip-molded body may also further contain a vulcanization accelerator. Moreover, the above-mentioned dip-molded body may also further contain an anti-aging agent. The method for producing the above-mentioned dip-molded body and vulcanized dip-molded body can be obtained according to the method of Examples. In addition, as an example, the thickness can be 0.06 to 0.07 mm.

### 2. Method for producing polymer latex composition

The method for producing polymer latex composition according to one embodiment of the present invention may include a carboxy-modified chloroprene copolymer (B) polymerization step and a mixing step.

In the carboxy-modified chloroprene copolymer (B) polymerization step, a raw material containing a 2-chloro-1,3-butadiene monomer (B-1) and a carboxy group-containing vinyl monomer (B-2), or a raw material containing a 2-chloro-1,3-butadiene monomer (B-1), a carboxy group-containing vinyl monomer (B-2), and a 2,3-dichloro-1,3-butadiene monomer can be polymerized in the presence of at least pure water, a chain transfer agent, an emulsifier, a pH adjuster, and an initiator at a polymerization temperature of 5 to 55°C and a polymerization conversion rate of 60% to 99% to obtain a carboxy-modified chloroprene copolymer (B) latex containing the carboxy-modified chloroprene copolymer (B). In the mixing step, a carboxy-modified acrylonitrile-butadiene copolymer (A) latex containing the carboxy-modified acrylonitrile-butadiene copolymer (A) and the carboxy-modified chloroprene copolymer (B) latex containing the carboxy-modified chloroprene copolymer (B) can be mixed. The order of mixing in the mixing step is not particularly limited, but the polymer latex containing the carboxy-modified acrylonitrile-butadiene copolymer (A) and the polymer latex containing the carboxy-modified chloroprene copolymer (B) can be mixed, so that the component ratio (A)/(B) of the carboxy-modified acrylonitrile-butadiene copolymer (A) and the carboxy-modified chloroprene copolymer (B) becomes 90/10 to 50/50, and further the metal oxide (C) can be added. In addition, in the mixing step, a mixed solution containing the metal oxide (C), and components such as a vulcanizing agent and a vulcanization accelerator to be added as necessary may be prepared in advance, and a polymer latex containing the carboxy-modified acrylonitrile-butadiene copolymer (A) and a polymer latex containing the carboxy-modified chloroprene copolymer (B) may be added to this mixed solution.

### 3. Dip-molded Body and Method for Producing Dip-molded Body

The dip-molded body according to one embodiment of the present invention can be a dip-molded body of the polymer latex composition according to one embodiment of the present invention. The dip-molded body according to one embodiment of the present invention is a dip-molded body using the polymer latex composition according to one embodiment of the present invention, and can be obtained by dip molding the polymer latex composition according to one embodiment of the present invention. The dip-molded body according to one embodiment of the present invention can be obtained by immersing a base material in a coagulating liquid containing the polymer latex composition according to one embodiment of the present invention and forming a dip-molded film on the base material.

In the method for producing dip-molded body according to this embodiment, the polymer latex composition according to this embodiment is dip molded. As a molding method for producing the dip-molded body according to this embodiment, it is possible to use a known method, and examples thereof include a simple dipping method, an adhesive dipping method, a heat-sensitive dipping method, an electrodeposition method, etc. The adhesive dipping method can be used from the viewpoint of easy production and the viewpoint of easily obtaining a dip-molded body of a constant thickness. Specifically, a mold die coated with a flocculant is immersed in the polymer latex composition, and the polymer latex composition is coagulated. Then, after water-soluble impurities are removed by leaching, it is dried, and further vulcanized to form a dip-molded film (rubber coating), and then the dip-molded film is released from the mold. Thereby, a film-like dip-molded body can be obtained.

The thickness (for example, minimum thickness) of the dip-molded body may be 0.01 to 0.50 mm, 0.02 to 0.20 mm, or 0.04 to 0.10 mm. The thickness of the dip-molded body is, for example, 0.01, 0.02, 0.03, 0.04, 0.05, 0.06, 0.07, 0.08, 0.09, 0.10 mm, and may be within the range between any two of the numerical values exemplified here. The thickness of the dip-molded body can be adjusted by adjusting the time for immersing the mold die in the polymer latex composition, the solid content concentration of the polymer latex composition or the like. If it is desired to reduce the thickness of the dip-molded body, the immersion time may be shortened or the solid content concentration of the polymer latex composition may be reduced.

### 4. Vulcanizate and method for producing vulcanizate

A vulcanizate (vulcanized dip-molded body) an be obtained by vulcanizing the polymer latex composition according to one embodiment of the present invention and an unvulcanized dip-molded body. The vulcanizate according to one embodiment of the present invention is a vulcanizate of the polymer latex composition according to one embodiment of the present invention and the unvulcanized dip-molded body, and can be obtained by vulcanizing the polymer latex composition according to one embodiment of the present invention and the unvulcanized dip-molded body. The vulcanizate according to this embodiment can be formed into a film. The temperature at which the polymer latex composition and unvulcanized dip-molded body are vulcanized may be appropriately set according to the composition of the polymer latex composition, and may be 100 to 220°C, or 110 to 190°C. The vulcanization time for vulcanizing the polymer latex composition and unvulcanized dip-molded body may be appropriately set depending on the composition of the rubber composition, the shape of the unvulcanized molded body, etc., and may be 10 to 60 minutes.

The dip-molded body and vulcanizate according to one embodiment of the present invention have very high flexibility, and have sufficient breaking strength and breaking elongation as a dip-molded body. The dip-molded body according to one embodiment of the present invention may be a molded body of the vulcanizate according to this embodiment. The dip-molded body according to one embodiment of the present invention may be a glove, a balloon, a catheter, or a boot. Examples of gloves include inspection gloves, surgical gloves, household gloves or the like. The dip-molded body according to one embodiment of the present invention has excellent breaking strength and is difficult to tear even when used in thin gloves, and has improved flexibility and breaking elongation, so that it can be suitably used as, for example, disposable gloves or gloves for inspection.

### EXAMPLES

Hereinafter, the present invention will be explained in more detail based on Examples and Comparative Examples, but the present invention is not limited to these Examples.

### (Example 1)

### <Carboxy-Modified Acrylonitrile-Butadiene Copolymer (A)>

Acrylonitrile-butadiene copolymer latex "LX550L" (Nippon Zeon Co., Ltd.) was used as the latex containing the carboxy-modified acrylonitrile-butadiene copolymer (A). As a result of H-NMR measurement, the composition was 33% by mass of monomer units derived from acrylonitrile monomer, 61% by mass of monomer units derived from butadiene, and 6% by mass of monomer units derived from methacrylic acid.

### <Preparation of Carboxy-Modified Chloroprene Copolymer (B)>

99.0 parts by mass of 2-chloro-1,3-butadiene, 1.0 parts by mass of methacrylic acid, 0.40 parts by mass of n-dodecylmercaptan, 90 parts by mass of pure water, 1.4 parts by mass of sodium dodecylbenzenesulfonate (manufactured by Kao Corporation, Trade name: G-15), 0.16 parts by mass of sodium hydroxide, 1.20 parts by mass of sodium salt of β-naphthalenesulfonic acid formalin condensate (manufactured by Kao Corporation, trade name: Demol N), and 0.41 parts by mass of sodium bisulfite were mixed. After adding 0.1 parts by mass of potassium persulfate as a polymerization initiator, polymerization was carried out at a polymerization temperature of 45°C under nitrogen flow. When the polymerization rate reached 98%, a polymerization terminator was added to terminate the polymerization, unreacted monomers were removed, and 10% KOH was added to adjust the pH to 10.5. Next, a latex containing carboxy-modified chloroprene copolymer (B) with a solid content concentration of 45% was obtained by adjusting the solid content. H-NMR measurement of the carboxy-modified chloroprene copolymer reveals that the polymer composition was 99.2% by mass of monomer units derived from chloroprene, and 0.8% by mass of monomer units derived from methacrylic acid.

A latex containing carboxy-modified acrylonitrile-butadiene copolymer (A) and a latex containing carboxy-modified chloroprene copolymer (B) were then mixed at a ratio (A)/(B) of 70/30 (mass ratio of solid content) to obtain a polymer latex.

### (Example 2)

A polymer latex was prepared in the same manner as in Example 1, except that the monomers used to prepare the latex containing carboxy-modified chloroprene copolymer (B) in Example 1 were changed to 97.5 parts by mass of 2-chloro-1,3-butadiene and 2.5 parts by mass of methacrylic acid. H-NMR measurement reveals that the polymer composition was 98.0% by mass of monomer units derived from chloroprene, and 2.0% by mass of monomer units derived from methacrylic acid.

### (Example 3)

A polymer latex was prepared in the same manner as in Example 1, except that the monomers used to prepare the latex containing carboxy-modified chloroprene copolymer (B) in Example 1 were changed to 94.0 parts by mass of 2-chloro-1,3-butadiene and 6.0 parts by mass of methacrylic acid, and 120 parts by mass of pure water and 1.87 parts by mass of sodium dodecylbenzenesulfonate were used. H-NMR measurement reveals that the polymer composition was 95.0% by mass of monomer units derived from chloroprene, and 5.0% by mass of monomer units derived from methacrylic acid.

### (Example 4)

A polymer latex was prepared in the same manner as in Example 1, except that the mixing ratio (A)/(B) of the polymer was set to 90/10.

### (Example 5)

A polymer latex was prepared in the same manner as in Example 1, except that the mixing ratio (A)/(B) of the polymer was set to 50/50.

### (Example 6)

A latex composition was prepared in the same manner as in Example 1, except that the monomers used to prepare the latex containing carboxy-modified chloroprene copolymer (B) in Example 1 were changed to 88.0 parts by mass of 2-chloro-1,3-butadiene, 9.5 parts by mass of 2,3-dichloro-1,3-butadiene, and 2.5 parts by mass of methacrylic acid. H-NMR measurement reveals that the polymer composition was 98.0% by mass of monomer units derived from chloroprene, and 2.0% by mass of monomer units derived from methacrylic acid.

### (Example 7)

A latex composition was prepared in the same manner as in Example 1, except that the monomers used to prepare the latex containing carboxy-modified chloroprene copolymer (B) in Example 1 were changed to 97.5 parts by mass of 2-chloro-1,3-butadiene and 2.5 parts by mass of maleic acid. H-NMR measurement reveals that the polymer composition was 98.0% by mass of monomer units derived from chloroprene, and 2.0% by mass of monomer units derived from maleic acid.

### (Comparative Example 1)

A chloroprene polymer produced by the following method was used instead of the latex containing carboxy-modified chloroprene copolymer (B) in Example 1. 100 parts by mass of 2-chloro-1,3-butadiene, 0.04 parts by mass of n-dodecylmercaptan, 90 parts by mass of pure water, 1.4 parts by mass of sodium dodecylbenzenesulfonate (manufactured by Kao Corporation, trade name: G-15), 0.16 parts by mass of sodium hydroxide, and 1.20 parts by mass of sodium salt of β-naphthalenesulfonic acid formalin condensate (manufactured by Kao Corporation, trade name: Demol N) were mixed. After adding 0.1 parts by mass of potassium persulfate as a polymerization initiator, polymerization was carried out at a polymerization temperature of 45°C under nitrogen flow. When the polymerization rate reached 90%, a polymerization terminator was added to terminate the polymerization, a carboxy-unmodified chloroprene polymer with a solid content concentration of 45% was obtained by removing unreacted monomers and adjusting the solid content. Thereafter, a latex composition was prepared in the same manner as in Example 1.

### (Comparative Example 2)

A polymer latex was prepared in the same manner as in Example 1, except that the mixing ratio (A)/(B) of the polymer was set to 100/0.

### (Comparative Example 3)

A polymer latex was prepared in the same manner as in Example 1, except that the mixing ratio (A)/(B) of the polymer was set to 30/70.

### <Preparation of polymer latex composition>

Using a ceramic ball mill, 1 part by mass of sulfur, 2 parts by mass of Type 2 zinc oxide (manufactured by Sakai Chemical Industry Co., Ltd., trade name: Type 2 zinc oxide), 2 parts by mass of vulcanization accelerator (zinc dibutyldithiocarbamate, manufactured by OUCHI SHINKO CHEMICAL INDUSTRIAL CO., LTD., trade name: Nocceler BZ), 2 parts by mass of anti-aging agent (phenol-based anti-aging agent , oligomeric hindered phenol (butylated reaction product of DCPD and p-cresol, manufactured by OMNOVA SOLUTIONS Inc., trade name: Wingstay-L), 0.1 parts by mass of sodium salt of β-naphthalenesulfonic acid formalin condensate (manufactured by Kao Corporation, trade name: Demol N), and 10.7 parts by mass of water were mixed at 20°C for 16 hours to prepare an aqueous dispersion with a solid content concentration of 40%. After mixing 7.1 parts by mass of the solid content of the aqueous dispersion with 100 parts by mass of the solid content of the polymer latex of Example 1 to 7 and Comparative Example 1 to 3, for which a 5% potassium hydroxide aqueous solution was added to adjust the pH to 10, a polymer latex composition was prepared by adding water to adjust the solid content concentration to 13.5% by mass.

### (Comparative Example 4)

A polymer latex was prepared in the same manner as in Example 1.

Using a ceramic ball mill, 1 part by mass of sulfur, 2 parts by mass of vulcanization accelerator, 2 parts by mass of anti-aging agent, 0.1 parts by mass of sodium salt of β-naphthalenesulfonic acid formalin condensate (manufactured by Kao Corporation, trade name: Demol N), and 7.7 parts by mass of pure water were mixed at 20°C for 16 hours to prepare an aqueous dispersion with a solid content concentration of 40%. After mixing 5.1 parts by mass of the solid content of the aqueous dispersion with 100 parts by mass of the solid content of the polymer latex, for which a 5% potassium hydroxide aqueous solution was added to adjust the pH to 10, a polymer latex composition was prepared by adding water to adjust the total solid content concentration to 13.5% by mass.

Evaluation methods are described below.

### <Preparation of film for evaluation>

A coagulating liquid was obtained by mixing 72.7 parts by mass of water, 27.3 parts by mass of potassium nitrate tetrahydrate, and 0.05 parts by mass of surfactant (manufactured by Kao Corporation, trade name: Emulgen 109P). A ceramic cylinder (material: ceramics, manufactured by Shinko Co., Ltd.) having an outer diameter of 50 mm was immersed in this coagulating liquid for 5 seconds, and then the cylinder was taken out. After drying at room temperature for 3 minutes, it was dried at 70°C for 1 minute. The cylinder was then immersed in the latex composition described above for 23 seconds. Subsequently, after drying at 100°C for 2 minutes, it was washed by immersing it in 45°C warm water for 1 minute. Thereafter, by vulcanizing at 120°C for 20 minutes, a film for evaluation (dip-molded body, vulcanized film) was produced on the outer peripheral surface of the cylinder or the like. Evaluation was performed after peeling the film for evaluation from the outer peripheral surface of the cylinder.

### <Evaluation method>

### (Copolymerization amount of monomer unit derived from carboxy group-containing vinyl monomer in carboxy-modified chloroprene copolymer)

The carboxy-modified chloroprene copolymer latex was frozen at -60°C for 24 hours and then vacuum-dried for 24 hours to obtain a film of the carboxy-modified chloroprene copolymer. This film was cut into 2 mm square pieces using scissors, immersed in an ethanol-toluene mixed solution, and stirred for 1 hour. Using a pyrolysis gas chromatograph mass spectrometer (JMS-Q1000GC, manufactured by JEOL Ltd.), the peak of the mass spectrum component of the carboxy group was quantitatively analyzed, and the copolymerization ratio of the carboxy group-containing vinyl monomer in the carboxy-modified chloroprene copolymer was determined.

### (Thickness of film for evaluation)

The thickness of the film for evaluation (film thickness) was measured at three locations in the center of the film using a test piece thickness gauge (manufactured by Kobunshi Keiki Co., Ltd., trade name: ASKER SDA-12), and the minimum thickness was obtained as the thickness of the film for evaluation.

### (Physical properties of film for evaluation)

The modulus at 100%, 300%, and 500% elongation, breaking strength, and breaking elongation of the film for evaluation were measured in accordance with JIS K 6251. It was judged as good when the modulus at 300% elongation, which is an index of flexibility, was 5.0 MPa or less, the breaking elongation was 550% or more, and the breaking strength was 17.0 MPa or more.

### <Result>

By comparing each Example and each Comparative Example, it can be seen that when the carboxy-modified acrylonitrile-butadiene copolymer (A) and the carboxy-modified chloroprene copolymer (B) has a component ratio (A)/(B) of 90/10 to 50/50, and when metal oxide was contained, the modulus at 300% elongation was low and flexibility was excellent, the breaking elongation was also large, and it exhibits high breaking strength. In addition, as for the latex containing carboxy-modified chloroprene copolymer (B) obtained in Example 1, a polymer latex composition and a dip-molded body were prepared in the same manner as in Example 1, except that the latex containing carboxy-modified acrylonitrile-butadiene copolymer (A) was not added, and vulcanized at 130°C for 30 minutes to obtain a vulcanized dip-molded body (thickness 0.10 to 0.30 mm). Breaking strength and breaking elongation of the obtained vulcanized dip-molded body were measured, and it was confirmed that the breaking strength was 8 MPa or more, and the breaking elongation was 600% or more.

**[Table 1]**

| Table 1 | | | | Examples | | | | | | | Comparative Examples | | | |
|---|---|---|---|---|---|---|---|---|---|---|---|---|---|---|
| | | | | 1 | 2 | 3 | 4 | 5 | 6 | 7 | 1 | 2 | 3 | 4 |
| Polymerization recipe of carboxy-modified chloroprene copolymer (B) or chloroprene polymer latex | | 2-chloro-1,3-butadiene | parts by mass | 99.0 | 97.5 | 94 | 97.5 | 97.5 | 88.0 | 97.5 | 100 | - | 97.5 | 97.5 |
| | | 2,3-dichloro-1,3-butadiene | parts by mass | | | | | | 9.5 | | | | | |
| | | Methacrylic acid | parts by mass | 1.0 | 2.5 | 6.0 | 2.5 | 2.5 | 2.5 | | | | 2.5 | 2.5 |
| | | Maleic acid | parts by mass | | | | | | | 2.5 | | | | |
| | | Dodecyl mercaptan | parts by mass | 0.40 | 0.40 | 0.40 | 0.40 | 0.40 | 0.40 | 0.40 | 0.04 | | 0.40 | 0.40 |
| | | Pure water | parts by mass | 90 | 90 | 120 | 90 | 90 | 90 | 90 | 90 | | 90 | 90 |
| | | Sodium dodecylbenzenesulfonate | parts by mass | 1.4 | 1.4 | 1.9 | 1.4 | 1.4 | 1.4 | 1.4 | 1.4 | | 1.4 | 1.4 |
| | | Sodium hydroxide | parts by mass | 0.16 | 0.16 | 0.16 | 0.16 | 0.16 | 0.16 | 0.16 | 0.16 | | 0.16 | 0.16 |
| | | Sodium salt of β-naphthalenesulfonic acid formalin condensate | parts by mass | 1.20 | 1.20 | 1.20 | 1.20 | 1.20 | 1.20 | 1.20 | 1.20 | | 1.20 | 1.20 |
| | | Polymerization temperature | °C | 45 | 45 | 45 | 45 | 45 | 45 | 45 | 45 | | 45 | 45 |
| | | Polymerization conversion | % | 98 | 98 | 98 | 98 | 98 | 98 | 98 | 90 | | 98 | 98 |
| Composition of carboxy-modified chloroprene copolymer (B) | | Chloroprene polymer (B-1) | % bv mass | 99.2 | 98.0 | 95.0 | 98.0 | 98.0 | 98.0 | 98.5 | 100 | - | 98.0 | 98.0 |
| | | Carboxy group-containing vinyl monomer (B-2) | % by mass | 0.8 | 2.0 | 5.0 | 2.0 | 2.0 | 2.0 | 1.5 | 0 | - | 2.0 | 2.0 |
| Compounding ratio of composition | Polymer | Carboxy-modified acrylonitrile-butadiene copolymer (A) | parts by mass | 70 | 70 | 70 | 90 | 50 | 70 | 70 | 70 | 100 | 30 | 70 |
| | | Carboxy-modified chloroprene copolymer (B) | parts by mass | 30 | 30 | 30 | 10 | 50 | 30 | 30 | | 0 | 70 | 30 |
| | | Chloroprene polymer (unmodified) | parts by mass | | | | | | | | 30 | | | |
| | | Total | parts by mass | 100 | 100 | 100 | 100 | 100 | 100 | 100 | 100 | 100 | 100 | 100 |
| | Metal oxide (C) | Zinc oxide | parts by mass | 2 | 2 | 2 | 2 | 2 | 2 | 2 | 2 | 2 | 2 | |
| | Vulcanizing agent | Sulfur | parts by mass | 1 | 1 | 1 | 1 | 1 | 1 | 1 | 1 | 1 | 1 | 1 |
| | Vulcanization accelerator | Zinc dibutyldithiocarbamate | parts by mass | 2 | 2 | 2 | 2 | 2 | 2 | 2 | 2 | 2 | 2 | 2 |
| | Anti-aging agent | Phenol-based anti-aging agent | parts by mass | 2 | 2 | 2 | 2 | 2 | 2 | 2 | 2 | 2 | 2 | 2 |
| Physical properties | Dip-molded body | Film thickness | mm | 0.06 | 0.07 | 0.07 | 0.07 | 0.06 | 0.07 | 0.07 | 0.08 | 0.06 | 0.07 | 0.07 |
| | | Modulus at 100% | MPa | 1.60 | 1.59 | 1.70 | 2.43 | 1.59 | 1.46 | 1.63 | 2.13 | 2.44 | 1.03 | 1.43 |
| | | Modulus at 300% | MPa | 3.22 | 309 | 3.31 | 4.85 | 2.89 | 2.96 | 3.42 | 5.43 | 6.15 | 2.52 | 2.31 |
| | | Modulus at 500% | MPa | 7.46 | 6.84 | 7.03 | 14.0 | 6.18 | 6.53 | 6.93 | 16.7 | 20.6 | 6.31 | 4.91 |
| | | Breaking strength | MPa | 22.0 | 21.1 | 22.3 | 32.3 | 17.8 | 19.5 | 20.5 | 18.1 | 37.3 | 11.2 | 14.3 |
| | | Breaking elongation | % | 581 | 681 | 735 | 553 | 680 | 732 | 655 | 516 | 480 | 644 | 513 |

## Claims

1. A polymer latex composition comprising a carboxy-modified acrylonitrile-butadiene copolymer (A), a carboxy-modified chloroprene copolymer (B), and a metal oxide (C), wherein:
a component ratio (A)/(B) of the carboxy-modified acrylonitrile-butadiene copolymer (A) and the carboxy-modified chloroprene copolymer (B) in the polymer latex composition is 90/10 to 50/50.

2. The polymer latex composition of Claim 1, wherein:
the carboxy-modified chloroprene copolymer (B) comprises a monomer unit derived from a 2-chloro-1,3-butadiene monomer (B-1) and a monomer unit derived from a carboxy group-containing vinyl monomer (B-2), and
when the carboxy-modified chloroprene copolymer (B) is 100 parts by mass, the carboxy-modified chloroprene copolymer (B) comprises 0.5 to 5.0 parts by mass of the monomer unit derived from the carboxy group-containing vinyl monomer (B-2).

3. The polymer latex composition of Claim 2, wherein:
the carboxy group-containing vinyl monomer (B-2) is at least one selected from the group consisting of an acrylic acid, a methacrylic acid, a crotonic acid, an itaconic acid, a maleic acid, and a fumaric acid.

4. The polymer latex composition of Claim 1 or 2, wherein:
the polymer latex composition comprises a sulfur, a vulcanization accelerator, and an anti-aging agent.

5. The polymer latex composition of Claim 1 or 2, wherein:
a vulcanized dip-molded body, obtained by vulcanizing a dip-molded body comprising the polymer latex composition at 120°C for 20 minutes, has a breaking strength of 17 MPa or more and a breaking elongation of 550% or more as measured in accordance with JIS K6251.

6. A dip-molded body obtained from the polymer latex composition of Claim 1 or 2.

7. The dip-molded body of Claim 6, wherein:
the dip-molded body is a glove, a balloon, a catheter, or a boot.

8. A method for producing the polymer latex composition of Claim 1 or 2, comprising a carboxy-modified chloroprene copolymer (B) polymerization step and a mixing step, wherein:
in the carboxy-modified chloroprene copolymer (B) polymerization step, a raw material comprising a 2-chloro-1,3-butadiene monomer (B-1) and a carboxy group-containing vinyl monomer (B-2), or a raw material comprising a 2-chloro-1,3-butadiene monomer (B-1), a carboxy group-containing vinyl monomer (B-2), and a 2,3-dichloro-1,3-butadiene monomer is polymerized in the presence of at least pure water, a chain transfer agent, an emulsifier, a pH adjuster, and an initiator at a polymerization temperature of 5 to 55°C and a polymerization conversion rate of 60% to 99% to obtain a carboxy-modified chloroprene copolymer (B) latex comprising the carboxy-modified chloroprene copolymer (B), and
in the mixing step, a carboxy-modified acrylonitrile-butadiene copolymer (A) latex comprising the carboxy-modified acrylonitrile-butadiene copolymer (A) and the carboxy-modified chloroprene copolymer (B) latex comprising the carboxy-modified chloroprene copolymer (B) are mixed.
